# EUROPEAN PATENT APPLICATION

(11) **EP 3 886 411 A1**
(43) Date of publication of application: **29.09.2021**
(21) Application number: 20166230.1
(22) Date of filing: 27.03.2020
(51) Int. Cl.: H04M 1/60, H04M 1/725, G10L 13/00

(54) **SPEECH SYSTEM FOR A VEHICULAR DEVICE HOLDER**

(71) Applicant: Lin, Yi Sheng, New Taipei City (TW)
(72) Inventor: Lin, Yi Sheng, New Taipei City (TW)
(74) Representative: Gee, Steven William

(57) **Abstract**

Embodiments disclosed herein relate to a speech system for a vehicular device holder. The speech system can include a sensor base embedded with an inductive circuit chip and a surface for holding a device. The inductive circuit chip can comprise at least one identification code. The speech system may also include a mobile computing device coupled to the sensor base and configured with a local terminal application. The mobile computing device can be placed within the surface of the sensor base to transmit the at least one identification code. The speech system may also include a remote server that is configured to received the identification code from the mobile computing device, and authenticate the identification code, and transmit an acknowledge signal to the mobile computing device. The speech system may also include an input device coupled to the remote server and mobile computing device. The input device may provide a user selection for continuing or interrupting text-to-speech conversion of the local terminal application.

## Description

### TECHNICAL FIELD

The present disclosure generally relates to a speech system. More specifically, the present invention provides a speech system for a vehicular device holder. The speech system is able to perform text-to-speech conversion on the text received by the mobile device that is held in the vehicular device holder.

### BACKGROUND

Mobile devices, especially today's smart phones, are often used to provide drivers with navigation functions while driving, and are also often used for communication functions such as message transfer or call. Drivers often cannot use their hands to apply one or more functions to their mobile devices.

As a result, for driving safety, the operation for the above functions through the mobile device is usually through automatic voice playback for outputting, in combination with a wireless sensor device so as to avoid excessive distraction of the user's attention and minimize hand operations. However, most of the existing technologies and products still require users to manually turn on various functions with their hands, and rarely provide user identification and customized settings, such as text filtering, voice selection, and other functions. In addition, if the driver encounters lengthy and unwanted content, the driver cannot arbitrarily interrupt or skip the undesired or unwanted content.

Therefore, it is imperative devise an improved speech system to solve the above problems and further increase safety and convenience. Moreover, an improved speech system that allows users to have text-to-speech conversion with customized settings for text filtering, voice selection, and other functions.

### SUMMARY

An embodiment relates to a system comprising: a sensor base embedded with an inductive circuit chip and a surface for holding one or more devices, wherein the inductive circuit chip comprises at least one identification code. The system may also comprise a mobile computing device coupled to the sensor base configured with a local terminal application, and placed within the surface of the sensor base to transmit the at least one identification code. The system may further comprise a remote server configured to receive the at least one identification code from the mobile computing device and transmit an acknowledge signal to the local terminal application within the mobile computing device to enable the local terminal application to begin. The system may also comprise an input device coupled to the remote server and the mobile computing device, and configured to provide a user selection for continuing or interrupting text-to-speech conversion of the local terminal application.

The input device can provide a user selection for text source filtering to allow a user to filter unwanted sources of a received message.

The input device can provide an age-rating filter to prevent inappropriate content.

The input device provides a text language processing function to adjust a pronunciation of one or more languages.

A network system for vehicular device holder can comprise a base station embedded with a Near Field Communication (NFC) tag assembly and comprising one or more identification codes. The network system can also comprise a mobile device coupled to the base station and configured within the base station to induct with the NFC tag assembly and obtain a website address and the one or more identification codes through the NFC tag assembly. The network system can further comprise a remote server coupled to the mobile device and configured to receive the one or more identification codes from the mobile device to authenticate the one or more identification codes and enable a local terminal application to operate within the mobile device. The network system may also comprise an input device coupled to the base station, mobile device and remote server, and configured with an input button to enable functions for text source filtering, text language processing, and text recognition.

The input device provides an option to interrupt text-to-speech conversation of the local terminal application.

The input device provides filtering options to filter unwanted or undesired content.

The input button enables a user to continue text-to-speech conversation of the local terminal application.

The remote server compares the one or more received identification codes with a list of stored authentication codes to determine whether to authenticate the received one or more identification codes.

A method for filtering content for a vehicular device holder may include configuring a sensor base with an inductive circuit chip with an identification code and a surface to hold a mobile computing device, wherein the inductive circuit chip is embedded into the sensor base. The method may also include configuring a local terminal application onto the mobile computing device to enable the mobile computing device to read the identification code within the sensor base. Further, the method may include placing the mobile computing device onto the surface of the sensor base to induct with the inductive circuit chip, and transmit the identification code for authentication. In addition, the method may include receiving the identification code by a remote server and authenticating the identification code after comparing the identification code to a stored list of authentication codes within the remote server. The method may also include providing text-to-speech conversion filtering functions by an input device coupled to the mobile computing device for the local terminal application in response to the identification code being authenticated by the remote server.

The local terminal application can begin in response to the remote server authenticating the identification code.

The input device provides filtering functions for at least one of text language processing, text source filtering, and text processing.

The input device enables the text-to-speech conversation of the local terminal application to be interrupted.

The filtering options can be selected to filter unwanted sources of content from the text-to-speech conversion.

Other contemplated embodiments can include objects, features, aspects, and advantages in addition to or in place of those mentioned above. These objects, features, aspects, and advantages of the embodiments will become more apparent from the following detailed description, along with the accompanying drawings.

### BRIEF DESCRIPTION OF THE FIGURES

The system of providing a speech system for a vehicular device holder is illustrated in the figures of the accompanying drawings which are meant to be exemplary and not limiting, in which like reference numerals are intended to refer to like components, and in which:
**FIG. 1** illustrates an exemplary schematic diagram of a vehicular device holder in accordance with an embodiment of the presently disclosed embodiments;
**FIG. 2** illustrates a diagram of a mobile computing device installed with a local terminal application in accordance with an embodiment of the presently disclosed embodiments;
**FIG. 3** illustrates a diagram of input device with a plurality of filtering functions for text-to-speech conversion of the local terminal application in accordance with an embodiment of the presently disclosed embodiments;
**FIG. 4** illustrates a diagram of a speech system including a vehicular device holder, mobile computing device, input device, and remote server, in accordance with an embodiment of the presently disclosed embodiments; and
**FIG. 5** illustrates a flowchart describing the speech system of the vehicular device holder in accordance with an embodiment of the presently disclosed embodiments.

Unless otherwise indicated illustrations in the figures are not necessarily drawn to scale.

### DETAILED DESCRIPTION OF SOME EMBODIMENTS

### Background and Context

The disclosed embodiments are best understood by reference to the Figures and detailed description herein.

Disclosed embodiments of the invention are discussed below with reference to the Figures. However, those skilled in the art will appreciate that the detailed description provided herein with respect to these figures is for explanatory purposes as the invention may extends beyond these currently disclosed embodiments. Various alternate approaches to implement the functionality of any given detail described herein is envisioned. That is, there are modifications and variations of the invention that are too numerous to be listed but that all fit within the scope of the invention. Also, singular words should be read as plural and vice-versa, where appropriate, and alternative embodiments do not imply mutual exclusivity.

It is to be further understood that the disclosed embodiments are not necessarily limited to the particular methodology, techniques, uses, and applications, described herein, as these may vary. It is also to be understood that the terminology used herein is used for the purpose of describing particular embodiments only, and is not otherwise intended to limit the scope of the present invention. It must be noted that as used herein in the detailed description and in the appended claims, the singular forms "a," "an," and "the" include the plural reference unless the context clearly dictates otherwise. Thus, for example, a reference to "an element" is a reference to one or more elements and includes equivalents thereof known to those skilled in the art. Physical and/or conceptual structures described herein are to be understood also to refer to functional equivalents of such structures.

All words of approximation as used in the present disclosure and claims should be construed to mean "approximate," rather than "perfect". Words of approximation, include, yet are not limited to terms such as "substantial", "nearly", "almost", "about", "generally", "largely", etc.

Terms of degree are not necessarily indefinite. "Claim language employing terms of degree has long been found definite where it provided enough certainty to one of skill in the art when read in the context of the invention." Interval Licensing LLC v. AOL, Inc., 766 F.3d 1364, 1370, 112 USPQ2d 1188, 1192-93 (Fed. Cir. 2014) (citing Eibel Process Co. v. Minnesota & Ontario Paper Co., 261 U.S. 45, 65-66 (1923. Thus, when a term of degree is used in the claim, the examiner should determine whether the specification provides some standard for measuring that degree. Hearing Components, Inc. v. Shure Inc., 600 F.3d 1357, 1367, 94 USPQ2d 1385, 1391 (Fed. Cir. 2010); Enzo Biochem, Inc., v. Applera Corp., 599 F.3d 1325, 1332, 94 USPQ2d 1321, 1326 (Fed. Cir. 2010); Seattle Box Co., Inc. v. Indus. Crating & Packing, Inc., 731 F.2d 818, 826, 221 USPQ 568, 574 (Fed. Cir. 1984).

The term "substantially" is often used in conjunction with another term to describe a particular characteristic of the claimed invention. It is a broad term. *In re Nehrenberg,* 280 F.2d 161, 126 USPQ 383 (CCPA 1960). The court held that the limitation "to substantially increase the efficiency of the compound as a copper extractant" was definite in view of the general guidelines contained in the specification. *In re Mattison,* 509 F.2d 563, 184 USPQ 484 (CCPA 1975).

All questions of enablement are evaluated against the claimed subject matter. The focus of the examination inquiry is whether everything within the scope of the claim is enabled.

Unless defined otherwise, all technical and scientific terms used herein have the same meanings as commonly understood by one of ordinary skill in the art to which the disclosed embodiments belong. Preferred methods, techniques, devices, and materials are described, although any methods, techniques, devices, or materials similar or equivalent to those described herein may be used in the practice or testing of the present invention.

Although Claims have been included in this Application to specific enumerated combinations of features, it should be understood that the scope of the present disclosure also includes any novel feature or any novel combination of features disclosed herein.

References "an embodiment," "example embodiment," "various embodiments," "some embodiments," etc., may indicate that the embodiment(s) so described may include a particular feature, structure, or characteristic, but not every possible embodiment necessarily includes that particular feature, structure, or characteristic.

References to "user", or any similar term, as used herein, may mean a human or non-human (e.g., computer-based) user thereof. Moreover, "user", or any similar term, as used herein is contemplated to mean users at any stage of a usage process.

References to "person", "individual", "human", "a party", or any similar term, as used herein, it should be understood that such references are sole by way of example
Headings provided are for convenience and are not to be taken as limiting the present disclosure in any way.

Each term utilized herein is to be given its broadest interpretation given the context in which that term is utilized.

### Terminology

The following paragraphs provide context for terms found in the present disclosure (including the claims):
The transitional term "comprising", which is synonymous with "including," "containing," or "characterized by," is inclusive or open-ended and does not exclude additional, unrecited elements or method steps. See, e.g., Mars Inc. v. H.J. Heinz Co., 377 F.3d 1369, 1376, 71 USPQ2d 1837, 1843 (Fed. Cir. 2004) ("[L]ike the term 'comprising,' the terms 'containing' and 'mixture' are open-ended."). "Configured to" or "operable for" is used to connote structure by indicating that the mechanisms/units/circuits/components include structure that performs the task or tasks during operation. "Configured to" may include adapting a manufacturing process to fabricate components that are adapted to implement or perform one or more tasks.

"Based On." As used herein, this term is used to describe factors that affect a determination without otherwise precluding other or additional factors that may affect that determination. More particularly, such a determination may be solely "based on" those factors or based, at least in part, on those factors.

All terms of example language (e.g., including, without limitation, "such as", "like", "for example", "for instance", "similar to", etc.) are not exclusive of other examples and therefore mean "by way of example, and not limitation...".

A description of an embodiment having components in communication with each other does not infer that all enumerated components are needed.

A commercial implementation in accordance with the scope and spirit of the present disclosure may be configured according to the needs of the particular application, whereby any function(s of the teachings related to any described embodiment of the present invention may be suitably changed by those skilled in the art.

A "computer" may refer to a machine that can be instructed to carry out sequences of arithmetic or logical operations automatically via computer programming. Modern computers have the ability to follow generalized sets of operations, called programs. These programs enable computers to perform an extremely wide range of tasks. A "complete" computer including the hardware, the operating system (main software), and peripheral equipment required and used for "full" operation can be referred to as a computer system. This term may as well be used for a group of computers that are connected and work together, in particular a computer network or computer cluster. Computers are used as control systems for a wide variety of industrial and consumer devices.

Those of skill in the art will appreciate that some embodiments of the disclosure may be practiced in network computing environments with many types of computer system configurations, including hand-held devices programmable consumer electronics. Where appropriate, embodiments may also be practiced in distributed computing environments where tasks may be completed by local and remote processing devices.

"Software" may refer to a collection of data or computer instructions that tell the computer how to work. This is in contrast to physical hardware, from which the system is built and actually performs the work. In computer science and software engineering, computer software is all information processed by computer systems, programs and data. Computer software includes computer programs, libraries and related non-executable data, such as online documentation or digital media. Computer hardware and software require each other and neither can be realistically used on its own.

The example embodiments described herein can be implemented in an operating environment comprising computer-executable instructions (e.g., software) installed on a computer, in hardware, or in a combination of software and hardware. The computer-executable instructions can be written in a computer programming language or can be embodied in firmware logic.

A "computer network" refers to a digital telecommunications network which allows nodes to share resources. In computer networks, computing devices exchange data with each other using connections (data links) between nodes. These data links are established over cable media such as wires or optic cables, or wireless media such as Wi-Fi. Network computer devices that originate, route and terminate the data are called network nodes. Nodes are generally identified by network addresses, and can include hosts such as personal computers, phones, and servers, as well as networking hardware such as routers and switches. Two such devices can be said to be networked together when one device is able to exchange information with the other device, whether or not they have a direct connection to each other.

Computer networks differ in the transmission medium used to carry their signals, communications protocols to organize network traffic, the network's size, topology, traffic control mechanism and organizational intent. The best-known computer network is the Internet, which is the global system of interconnected computer networks that use the Internet protocol suite (TCP/IP) to link devices worldwide. It is a network of networks that includes private, public, academic, business, and government networks of local to global scope, linked by a broad array of electronic, wireless, and optical networking technologies.

Aspects of the present invention are described below with reference to flowchart illustrations and/or block diagrams of methods, apparatus (systems) and computer program products according to the disclosed embodiments. Each block of the flowchart illustrations and/or block diagrams, and combinations of blocks in the flowchart illustrations and/or block diagrams, can be implemented by computer program instructions.

The flowchart and block diagrams in the figures illustrate the architecture, functionality, and operation of possible implementations of systems, methods and computer program products according to various embodiments. In this regard, each block in the flowchart or block diagrams may represent a module, segment, or portion of code, which comprises one or more executable instructions for implementing the specified logical function(s). Functions noted in the block may occur out of the order noted in the figures. For example, two blocks shown in succession may, in fact, be executed substantially concurrently, or the blocks may sometimes be executed in the reverse order, depending upon the functionality involved.

Further, any sequence of steps that may be described does not necessarily indicate a condition that the steps be performed in that order. Some steps may be performed simultaneously.

The functionality and/or the features of a particular component may be alternatively embodied by one or more other devices which are not explicitly described as having such functionality/features. Also, various embodiments of the present invention need not include a device itself.

The term "computer-readable medium" as may be used herein refers to any medium is involved in providing data (e.g., instructions) which may be read by a computer, a processor or a like device. Such a medium may take many forms, including but not limited to, non-volatile media, volatile media, and transmission media.

Any references to a Non-volatile memory (NVM) or non-volatile storage is a type of computer memory that can retrieve stored information even after having been power cycled. In contrast, volatile memory needs constant power in order to retain data. Examples of non-volatile memory include read-only memory, flash memory, ferroelectric RAM, most types of magnetic computer storage devices (e.g. hard disk drives, solid state drives, floppy disks, and magnetic tape), optical discs, and early computer storage methods such as paper tape and punched cards.

Any references to a Non-volatile memory can be classified as traditional non-volatile disk storage, or storage in non-volatile memory chips (Flash memory Storage) - EEPROM, SSD, NAND, etc. Volatile memory, in contrast to non-volatile memory, is computer memory that requires power to maintain the stored information; it retains its contents while powered on but when the power is interrupted, the stored data is quickly lost.

Volatile memory has several uses including as primary storage. In addition to usually being faster than forms of mass storage such as a hard disk drive, volatility can protect sensitive information, as it becomes unavailable on power-down. Most of the general-purpose random-access memory (RAM) is volatile.

A transmission medium is something that can mediate the propagation of signals for the purposes of telecommunication. Signals are typically imposed on a wave of some kind suitable for the chosen medium. Vacuum or air constitutes a good transmission medium for electromagnetic waves such as light and radio waves. While material substance is not required for electromagnetic waves to propagate, such waves may be affected by the transmission media they pass through, for instance by absorption or by reflection or refraction at the interfaces between media. Technical devices can therefore be employed to transmit or guide waves. Thus, an optical fiber or a copper cable are used as transmission media.

Various forms of computer readable media may be involved in carrying sequences of instructions to a processor. For example, sequences of instruction (i) may be delivered from RAM to a processor, (ii) may be carried over a wireless transmission medium, and/or (iii) may be formatted according to numerous formats, standards or protocols, such as Bluetooth, TDMA, CDMA, 3G.

Where databases are described, it will be understood by those of ordinary skill in the art that: (i) database structures alternative to those described may be implemented, (ii) other memory structures other than databases may be implemented. Any schematic illustrations and accompanying descriptions of any sample databases presented herein are example arrangements for stored representations of information.

Any reference to "client-side" may refer to operations that are performed by the client in a client-server relationship in a computer network. Typically, a client is a computer application, such as a web browser, that runs on a user's local computer, smartphone, or other device, and connects to a server as necessary. Operations may be performed client-side because they require access to information or functionality that is available on the client but not on the server, because the user needs to observe the operations or provide input, or because the server lacks the processing power to perform the operations in a timely manner for all of the clients it serves.

When a server serves data in a commonly used manner, for example according to standard protocols such as HTTP or FTP, users may have their choice of a number of client programs (e.g. most modern web browsers can request and receive data using HTTP and FTP). In the case of more specialized applications, programmers may write their own server, client, and communications protocol which can only be used with one another.

Programs that run on a user's local computer without ever sending or receiving data over a network are not considered clients, and so the operations of such programs would not be termed client-side operations.

Example networks may operate with any of a number of protocols, such as Internet protocol (IP), asynchronous transfer mode (ATM), and/or synchronous optical network (SONET), user datagram protocol (UDP), IEEE 802.x, etc.

Embodiments of the invention may also be implemented in one or a combination of hardware, firmware, and software. They may be implemented as instructions stored on a machine-readable medium, which may be read and executed by a computing platform to perform the operations described herein.

More specifically, as will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless specifically stated otherwise, and as may be apparent from the following description and claims, it should be appreciated that throughout the specification descriptions utilizing terms such as "processing," "computing," "calculating," "determining," or the like, refer to the action and/or processes of a computer or computing system that manipulate and/or transform data represented as physical, such as electronic, quantities within the computing system's registers and/or memories.

Additionally, any uses of the phrase "configured to" or "operable for" can include generic structure (e.g., generic circuitry) that is manipulated by software and/or firmware to operate in a manner that is capable of performing the task(s) at issue. "Configured to" may also include adapting a manufacturing process to fabricate devices that are adapted to perform one or more tasks.

In a similar manner, the term "processor" may refer an electronic circuit which performs operations on some external data source, usually memory or some other data stream. The term is frequently used to refer to the central processor (central processing unit) in a system, but typical computer systems (especially SoCs) combine a number of specialized "processors". Embodiments within the scope of the present disclosure may also include tangible and/or non-transitory computer-readable storage media for carrying or having computer-executable instructions or data structures stored thereon. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design.

A non-transitory computer readable medium includes, but is not limited to: a hard drive, compact disc, flash memory, volatile memory, random access memory, magnetic memory, optical memory, semiconductor-based memory, phase change memory, optical memory, periodically refreshed memory, and the like.

### Introduction

The present invention provides a speech system for vehicular device holder, comprising: a sensor base, a remote server, and a local terminal application; the sensor base being embedded with an inductive circuit chip, the inductive circuit chip comprising an identification code and providing a surface for placing a mobile device; the local terminal application program being installed on the mobile device; wherein when the mobile device is placed on the sensor base, the local terminal application transmits the identification code in the induction circuit chip embedded in the sensor base to the remote server; when the remote server receives the identification code in the induction circuit chip in the sensor base, the remote server transmits an acknowledge signal to the local terminal application in the mobile device; when the local terminal application in the mobile device receives the acknowledge signal, the local terminal application in the mobile device starts to operate.

The inductive circuit chip can be a Near-Field Communication Tag. Remote servers can comprise an indenftification code database, wherein the remote server can recevive the identification code from a local terminal application running on a mobile device. The remote server can copare the identification code with the identification code database to detemrine whether to transmit an acknowledge signal back to the moible device. Accordingly, the remote server can determine an authenticity of the identification code through a computation methold to determine whether to transmit the ackowledge signal to the mobile device.

A user of the speech system can perform text source filtering through an input device to filter out text from specific sources as the local terminal application is running on the mobile device. Text language processing can adjust the pronunciation and intonation of the speech output according to different languages that the user may desire to see and listen the speech output in. Text recognition can be performed on text from sources that pass the filtering. The text recognition function can also be performed according to different languages.

Through the speech system for the vehicular device holder, NFC technology can be used for electromagnetic induction to achieve activation of speech function automatically and contact-free from the user. The NFC technology can also support customized functions of text language processing, text source filtering processing, text recognition, and speech output. In addition, if the driver were to encounter lengthy and uncessiary content, the driver can arbitrarily interrupt the text-to-spech conversation, which can further increase driving safety and convenience.

### System Structure

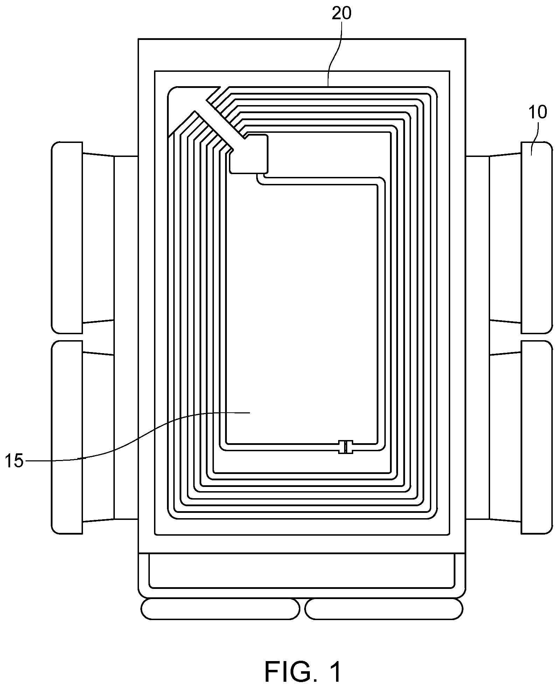

**FIG. 1** illustrates a schematic diagram of a base sensor **10** is illustrated. The base sensor **10** can be configured with a surface **15** that can hold a mobile computing device. The surface **15** within the base sensor **10** can enable a mobile computing device to be placed and held in contact with the base sensor **10.** An induction chip circuit **20** can be embedded within the base sensor **10.** The induction chip circuit **20** may also be a Near Field Communication ( NFC) tag assembly. The induction circuit chip **20** may also be configured under the surface **15.** The induction chip circuit **20** may also be embedded under the surface **15** of the sensor base **10** where the mobile computing device can be held within the sensor base **10.** The mobile computing device can be placed above and in contact with the induction chip circuit **10.** The induction chip circuit **10** can also include an identification code C_ID. A mobile device configured within the sensor base **10** can read the identification code C_ID.

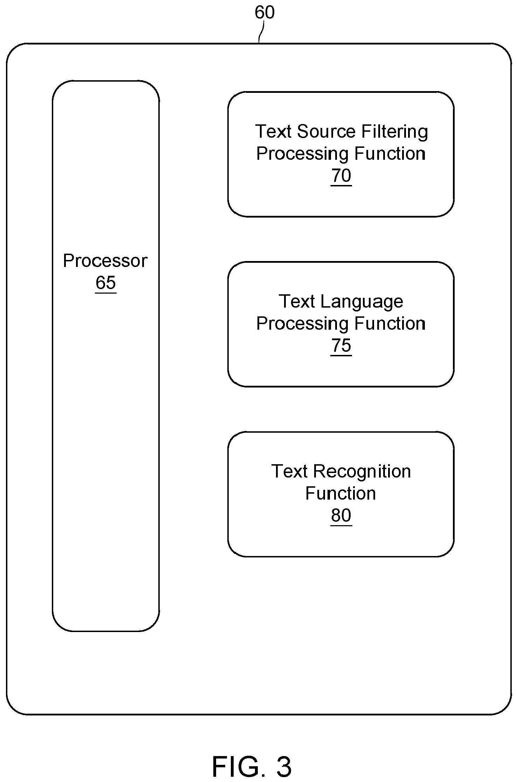

The mobile device may need to read the identification code in order to enable one or more programs within the mobile device to run. In addition, after reading the identification code C_ID, the mobile device can transmit the identification code C_ID to one or more remote servers within the same system as the sensor base 10. The one or more remote servers can authenticate the identification code C_ID. The identification code C_ID becoming authenticated can enable a program on the mobile computing device configured within the sensor base **10** to run, as will be explained further in **FIG. 3****.**

Via the the sensor base **10,** users can run one or more programs through a mobile device as soon as the identification code C_ID from the induction chip circuit **10** is authenticated. The sensor base **10** can provide the identification codes needed to run one or more programs on a computing device.

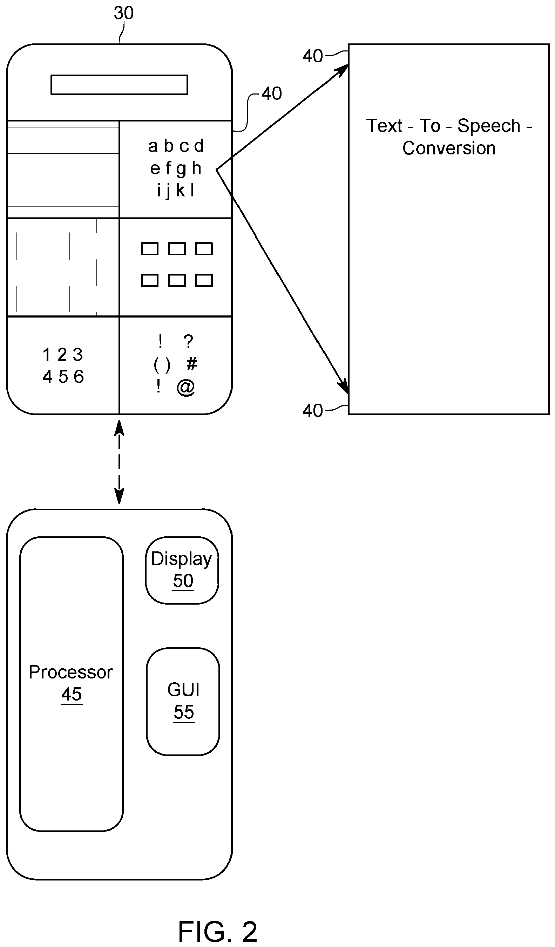

**FIG. 2****,** illustrates a mobile computing device **30** configured with a local terminal application **40.** The mobile computing device **30** can download and install the local terminal application **40** via the internet and web. The local terminal application **40** can include text of a running program that can be converted into speech in one or more languages. A user can use the local terminal application **40** to listen and converted text in their desired language(s). As will be described in **FIG. 3****,** the user can also use one or more filtering options to hear the desired portion of the text-to-speech conversion.

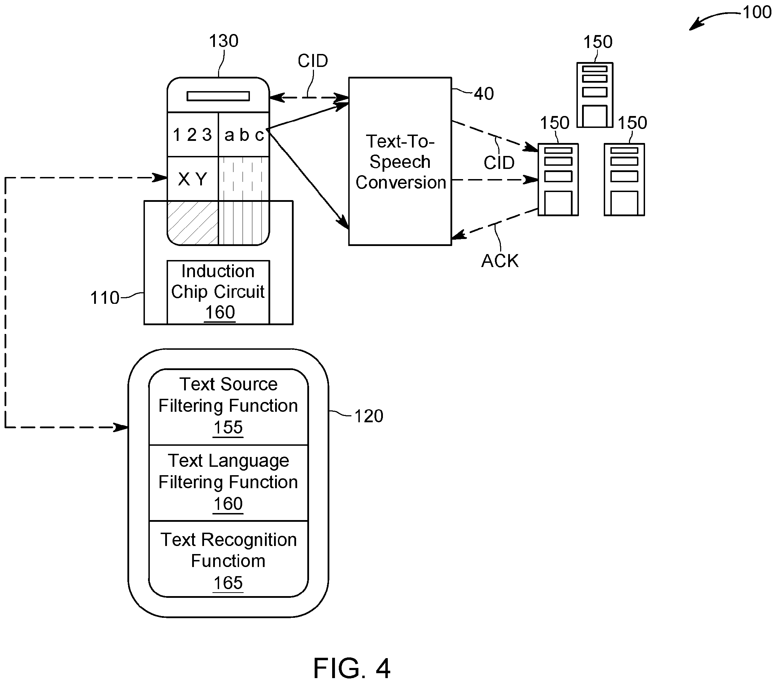

The mobile computing device **30** can include can a processor **45** and display **50,** and graphical user interface (GUI) **55.** The processor **45** can download the local terminal application **40** from the internet or or other computing device onto the mobile computing device **30.** A user can select the local terminal application **40** to run via the GUI **55.** The mobile computing device **30** may be placed within the surface **15** of the sensor base **10** described above in **FIG. 1** after local terminal application **40** has been downloaded. The mobile computing device **30** can read the identification code C_ID and also obtain a website address. As illustrated below in **FIG. 4****,** the mobile computing device **30** can transmit the read identification code C_ID to a remote server to authenticate the identification code C_ID. The authenticated identification code C_ID can enable the remote server to send an acknowledgement signal to the mobile computing device **30,** thereby allowing the local terminal application **40** to run.

**FIG. 3** illustrates an input device **60** that can be coupled to the sensor base **10** and the mobile computing device **30** within a speech system. The input device **60** may be coupled directly or wirelessly to the sensor base **10** and the mobile computing device **30.** The input device **60** can include one or buttons to allow user/driver selections of various functions that can filter portions of the text-to-speech converstion of the local terminal application **40.** The input device can include a processor **65,** and a text source filtering processing function **70,** a text language processing function **75,** and a text recognition function **80.**

The text source filtering processing function **70** can allow a driver/user to filter through unwanted or undesired sources of content such as text message advertising and/or line advertising. The user can interrupt the content of the text-to-speech to filter out the unwanted advertisements and other undesired content. The user may also use the text source filtering processing function **70** to repeaat and/or continue the text-to-speech conversion. The user may also want to filter content that may be inappropriate for listeners of a certain age or age group. Accordingly, The text source filtering processing function **70** can also include age-rating filtering which deletes or removes inappropriate content that may not be suitable for listeners of a certain age or age group.

A user may also wish to hear the speech in a particular language such as Mandarin. Further, the user may wish to hear the speech with the pronunciation and intonation that is common for the desired language (i. e. Mandarin). The text language function **75** can adjust the pronunciation or intonation of words depending on the language being used. As different languages can have different pronunciations and intonations for common words, the text language function **80** can adjust the pronunciation and intonation for the user. The text recognition function **80** can be executed based on the results that the user has filtered in regard to language settings.

The input device **60** can be used in conjunction with the sensor base (vehicular device holder) **10** and mobile computing device **30** to provide text-to-speech conversion of automatic playback of the local terminal application **40.** The input device **60** can be part of the same speech system as the sensor base **10** and mobile computing device **30** to provide the filtering functions that the user may desire to filter out undesired and unwanted content from the terminal application and have the text-to-speech conversion of desired content. In addition, the input device **60** may enable the user to filter content unsuitable for listeners of a certain age or age group and also adjust the intonation and/or pronunciation of the speech to the user's desired language

Referring to **Figure 4****,** a speech system **100** is illustrated. Those skilled in the art will appreciate that the representation shown of the system, devices, functionalities, instrumentalities, and/or capabilities associated with the speech system **100** are provided as an example only and that other suitable configurations and/or orientations, as well as additional and/or fewer modules and/or components, may exist without departing from the scope and spirit of the disclosed embodiment. On the speech system or communications network **100** one or more physical computer servers **150** can be at least partially executed and/or processed thereon. The communications network or speech system **100** may be in electronic communication with any one or more of the participants of the speech system **100.**

The speech system **100** can include a sensor base (vehicular device holder) **110,** input device **120,** mobile device **130** with a local terminal application **140,** and a remote server **150.** The sensor base **110,** input device **120,** and mobile device **130** can be substantially similar to what is described above in **FIGS. 1-3****.**

The sensor base **110** may include an induction chip circuit **160** that can be embedded within the sensor base **110.** The induction chip circuit **160** can include an identification code **C_ID** that needs to be authenticated by the remote server **150.** The sensor base **110** may also include a surface **150** to hold the mobile device **130** when the mobile device **130** is placed within the sensor base **110.** The mobile device **130** can download and install the local terminal application **140.** The mobile device **130** may be placed within the sensor base **110.** The mobile device **130** can read the identification code **C_ID,** and transmit the identification code **C_ID** to the remote server **150** for authentication. The remote server **150** can receive the identification code **C_ID** from the mobile device **130** and attempt to authenticate the identification code **C_ID.**

In an embodiment, the remote server **150** can compare the identification code **C_ID** with another identification code stored within the remote server **150.** If both identification codes match, the remote server **150** can authenticate the received identification code, and send an acknowledgement signal (**ACK**) to the mobile device **130.** In another embodiment, the remote server **150** can compare the identification code **C_ID** with a list of stored identification codes within the remote server **150.** The remote server **150** can also accordingly not authenticate the received identification code **C_ID** if the received identification code **C_ID** does not match with any of the stored identification codes within the remote server **150.** If the identification code C_ID matches with one or more of the stored identification codes, the remote server **150** may authenticate the received identification code C_ID. As the remote server **150** authenticates the received identification code **C_ID,** and sends the **ACK** signal to the mobile device **130,** the local terminal application **140** can then begin to run while the mobile device **130** is positioned within the sensor base **110.**

The local terminal application **140** within the mobile device **130** can begin to run in response to the **ACK** signal being received from the remote server **150,** with text-to-speech conversion beginning to occur. The input device **120** can be coupled to the mobile device **130** via a wired or wireless connection. The input device **120** can comprise one or more buttons to enable a user/driver to make a variety selections in relation to the local terminal application **140** running on the mobile device **130.** The input device **120** can provide a plurality of filtering functions for text-to -speech conversion of the local terminal application **140.**

Still referring to **FIG. 4****,** the filtering functions can include a text source filtering function **155,** a text language filtering function **160,** and a text recognition function **165.** The text source filtering function **155** can continue and/or interrupt the text-to-speech conversion of the local terminal application **140.** For instance, if the user hears unwanted content such as advertisements, the user can press the button on the input device **120** that activates the text source filtering function **155.** The activated text source filtering function **155** can thereby filter out the advertisements of the text from the local terminal application **140.** The user can use the text source filtering function **155** to interrupt the local terminal application **140** and filter out the unwanted advertisements. In addition, the text source filtering function **155** can include an age rating filter that can filter out inappropriate content due to the age of the user/driver and/or other listeners If a user determines that content is inappropriate for listeners of a certain age or age group, the age-rating filter can filter the content unsuitable for listeners of a specific age.

The text language filtering function **160** can adjust the pronunciation and/or intonation of the language to conform to the conventions of the language (I.e. English,Mandarin, etc.) being used in the text-to-speech conversion. If the user desires a certain pronunciation or intonation of the speech, the user can use the text language filtering function **160** to adjust the pronunciation or intonation of the language of the text-to-speech conversion. The user may use the text language filtering function **160** whenever the user desires to hear intonations and pronunications used in other languages. The text recognition function **165** can be executed by the results that the user has filtered with respect to language settings and different languages. The user may continue to use the filtering functions as the local terminal application is running to filter unwanted content or to adjust the text-to-speech to conform to specific language settings with regard to intonation and pronunciation. The user can also choose to end the local terminal application **140** after completing the text-to-speech conversion.

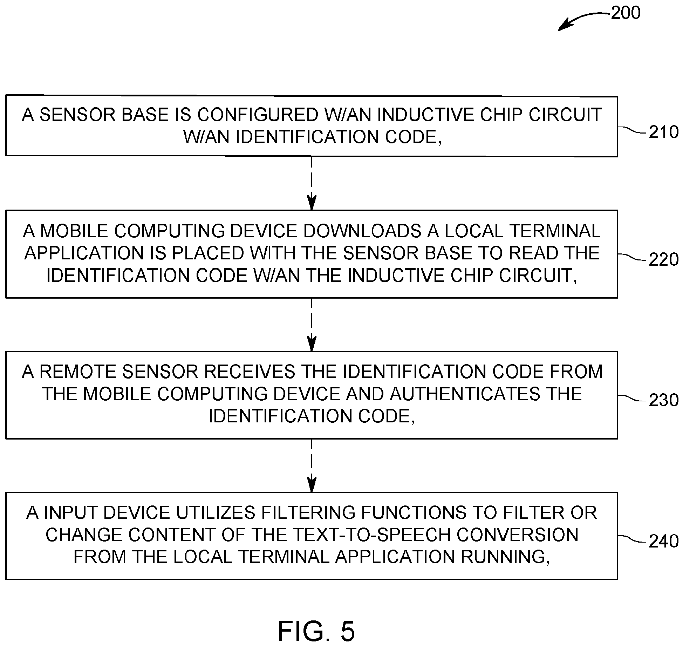

**FIG. 5** illustrates a method **200** for the speech system for the vehicular device holder. The method **200** illustrates a way in which the vehicular device holder can provide an identification code to a mobile device. The mobile device can read the identification code and attempt to authenticate the identification code using one or more remote servers. One or more programs such as a terminal application can run on the mobile device when the remote server authenticates the identification code

At step **210,** a sensor base is configured with an inductive chip circuit with an identification code. The inductive chip circuit can be a Near Field Communication (NFC) tag assembly and also be configured with at least one identification code. The sensor base can also be configured with a surface to hold one or more mobile computing devices. At step **220,** a mobile computing device downloads a local terminal application, and is placed within the sensor base to read the identification code within the inductive circuit chip. The mobile computing device can transmit the read identification code for authentication to a remote server.

At step **230,** a remote server receives the identification code from the mobile computing device. The remote server may attempt to authenticate the identification code by comparing the received identification code to a stored identification code, or to a list of stored identification codes. The remote server may not authenticate the received identification code if it cannot match the received identification code with one of the stored identification codes. Nevertheless, the remote server can authenticate the received identification code upon determining a match with a stored identification code. The remote server can send an acknowledgment signal to the mobile computing device that the identification code has been authenticated. The received acknowledgment signal can enable the local terminal application to begin to run.

At step **240,** an input device, coupled to the mobile computing device, can utilize several filtering functions to filter part of the text-to-speech conversion of the local terminal application. The input device can provide at least one button to enable a user/driver to continue and/or interrupt the text-to-speech conversion. The input device can provide various functions such as a text source filtering function, text language filtering function, and a text recognition function.

The text to source filtering function can filter unwanted content out of the terminal application, and also filter out content that may be unsuitable for various age groups. The user may use the text source filtering function to remove content that the user does not want as well as content that may not be suitable for a certain age group. The text language function can adjust the tone and intonation of the language being used to conform to conventions of the desired language by the user. The user can use the text language filtering function to adjust intonations and pronunciations of words according to a specific language which the user would want the text-to-speech conversion to occur. Further, the text recognition function can execute according to the user's filtered results with respect to language settings described above. The user may continue to allow the local terminal application to run and filter and adjust the content of the text-to-speech conversion. Further, the user can also decide to end the local terminal application after the user has finished the desired filtering of the text-to-speech conversion.

Those skilled in the art will appreciate that the example embodiments are non-exhaustive and that embodiments other than that described here may be included without departing from the scope and spirit of the presently disclosed embodiments.

### Advantages

Disclosed embodiments relate to methods and systems for more efficiently and effectively allowing one or more filtering options for drivers and listeners of video and audio content via a software application, wherein the software application runs on a mobile computing device (iPhone). The mobile computing device can download a software application with video and audio content. A vehicular device holder can be embedded with an identification code to enable the software application to run. By incorporating an identification code into a vehicular device holder, and enabling a mobile computing device positioned within the vehicular device holder to read the identification code, the mobile computing device can seamlessly transmit the identification code to one of remote servers for authentication to one of the remote servers to enable the application to run on the mobile computing device. The input device with several filtering functions can provide several advantages for drivers using the local terminal application running on the mobile device. The driver can use the filtering functions to filter out any unwanted content running on the application. Unwanted content could include advertisements as an example that is extraneous to the content of the running application. Further, the driver can also use the filtering functions to adjust the content to their preference, such adjusting the language that the content is in, including the pronunciation and intonation of words that correspond to the selected language.

Accordingly, the present invention seamlessly and efficiently authenticates a program running on a mobile computing device, and provides an efficient means for drivers to identify and listen to desired content and filter out unwanted content. Further, the present invention enables drivers to adjust the content they are listening to desired language settings with minimal hand use and contact while driving.

### Conclusion

All references, including granted patents and patent application publications, referred herein are incorporated herein by reference in their entirety.

All the features disclosed in this specification, including any accompanying abstract and drawings, may be replaced by alternative features serving the same, equivalent or similar purpose, unless expressly stated otherwise. Thus, unless expressly stated otherwise, each feature disclosed is one example only of a generic series of equivalent or similar features.

Various aspects of the invention have been described above by way of illustration, and the specific embodiments disclosed are not intended to limit the invention to the particular forms disclosed. The particular implementation of the speech system of the vehicular device holder provided thereof may vary depending upon the particular context or application. The invention is thus to cover all modifications, equivalents, and alternatives falling within the spirit and scope of the following claims. It is to be further understood that not all of the disclosed embodiments in the foregoing specification will necessarily satisfy or achieve each of the objects, advantages, or improvements described in the foregoing specification.

The corresponding structures, materials, acts, and equivalents of all means or step plus function elements in the claims below are intended to include any structure, material, or act for performing the function in combination with other claimed elements as specifically claimed.

## Claims

1. A system comprising:
a sensor base embedded with an inductive circuit chip and configured with a surface for holding one or more devices, wherein the inductive circuit chip comprises at least one identification code;
a mobile computing device coupled to the sensor base and configured with a local terminal application, and placed within the surface of the sensor base to transmit the at least one identification code;
a remote server configured to receive the at least one identification code from the mobile computing device and transmit an acknowledgement signal to the local terminal application within the mobile computing device to enable the local terminal application to begin; and
an input device coupled to the remote server and the mobile computing device, and configured to provide a user selection for continuing and/or interrupting text-to-speech conversion of the local terminal application.

2. The system of claim 1, wherein the input device provides a user selection for text source filtering to allow a user selection to filter unwanted sources of content.

3. The system of claim 1, wherein the input device provides an age-rating filter to filter undesired content.

4. The system of claim 1, wherein the input device provides a text language processing function to adjust a pronunciation and/or intonation of one or more languages.

5. The system of claim 1, wheren the induction circuit chip is an Near Field Communication (NFC) tag assembly.

6. The system of claim 1, wherein the local terminal application inducts with the induction circuit chip to obtain a website address and the at least one identification code to connect with the remote server.

7. A network system for a vehicular device holder, comprising:
a base station embedded with a Near Field Communication (NFC) tag assembly and comprising one or more identification codes;
a mobile device coupled to the base station and configured within the base station to induct with the NFC tag assembly and obtain a website address and the one or more identification codes through the NFC tag assembly;
a remote server coupled to the mobile device and configured to receive the one or more identification codes from the mobile device to authenticate the one or more identification codes to enable a local terminal application to operate within the mobile device; and
an input device coupled to the base station, mobile device, and remote server, and configured with an input button to enable user selections for text source filtering, text language processing, and text recognition.

8. The network system of claim 7, wherein the input device provides an option to interrupt text-to-speech conversation of the local termination application.

9. The network system of claim 7, wherein the input device provides filtering options to filter unwanted or undesired content.

10. The network system of claim 7, wherein the input button enables a user selection to continue text-to-speech conversation of the local terminal application.

11. The network system of claim 7, wherein the remote server compares the received identification codes with a list of stored authentication codes to determine whether to authenticate the received one or more identification codes.

12. The network system of claim 7, wherein the NFC tag assembly is embedded into the sensor base.

13. The network system of claim 7, wherein the input device provides at least one user selection of text language processing, text source filtering, and text recognition.

14. The network system of claim 7, wherein the input device provides a language support function.

15. The network system of claim 7, wherein the input device enables undesired content to be interrupted.

16. A method for filtering content for a vehicular device holder, the method comprising the steps of:
configuring a sensor base with an inductive circuit chip with an identification code and a surface to hold a mobile computing device, wherein the inductive circuit chip is embedded into the sensor base;
configuring a local terminal application onto the mobile computing device to enable the mobile computing device to read the identification code within the sensor base;
placing the mobile computing device onto the surface of the sensor base to induct with the inductive circuit chip, and transmit the identification code for authentication;
receiving the identification code by a remote server and authenticating the identification code after comparing the identification code to a stored list of authentication codes within the remote server; and
providing text-to-speech conversion filtering functions by an input device coupled to the mobile computing device for the local terminal application in response to the identification code being authenticated by the remote server.

17. The method of claim 16, further comprising:
beginning the local terminal application in response to the remote server authenticating the identification code.

18. The method of claim 16, wherein the input device provides filtering functions for at least one of a text language processing, text source filtering, and text processing.

19. The method of claim 16, wherein the input device enables the text-to-speech conversation of the local terminal application to be interrupted.

20. The method of claim 16, further comprising:
selecting the filtering options to filter unwanted sources of content from the text-to-speech conversion.
